# EUROPEAN PATENT APPLICATION

(11) **EP 3 062 583 A1**
(43) Date of publication of application: **31.08.2016**
(21) Application number: 14883264.5
(22) Date of filing: 16.06.2014
(51) Int. Cl.: H04W 88/16

(54) **METHOD FOR ESTABLISHING OPTIMAL PATH, MME AND GATEWAY, AND COMPUTER STORAGE MEDIUM**

(30) Priority: 21.02.2014 CN 201410061240
(71) Applicant: ZTE Corporation, Shenzhen, Guangdong 518057 (CN)
(72) Inventor: BI, Yifeng, Shenzhen Guangdong 518057 (CN); WANG, Jun, Shenzhen Guangdong 518057 (CN); TIAN, Tian, Shenzhen Guangdong 518057 (CN); WANG, Jing, Shenzhen Guangdong 518057 (CN); LI, Yuhong, Shenzhen Guangdong 518057 (CN); LI, Lin, Shenzhen Guangdong 518057 (CN)
(74) Representative: Brevalex
(86) International application number: PCT/CN2014/080017
(87) International publication number: WO 2015/123945

(57) **Abstract**

The present invention discloses a method for establishing an optimal path, an MME and gateway, and a computer storage medium, the method comprising: in the case of a terminal mobility event occurring, a mobility management entity (MME) determining whether the path to which a packet data network (PDN) is connected is the optimal path; if said path is a non-optimal path, said MME querying the local gateway whether there is data transmission; in the absence of said data transmission, said MME initiating a PDN connection reestablishment process.

## Description

### TECHNICAL FIELD

The disclosure relates to the field of communication, and in particular to a method for establishing an optimal path when a user executes SIPTO, an MME, a gateway, and a non-transitory computer-readable storage medium.

### BACKGROUND

Selected IP Traffic Offload (SIPTO) defined in 3rd Generation Partnership Project (3GPP) is a method for offloading specific traffic around where a user gets attached to an access network. In particular, in addition to supporting mobile core network access, a mobile communication system (including a household eNB system) may further support IP Traffic Offload. In case that a radio-side network element is capable of IP Traffic Offload and a user has subscribed for IP Traffic Offload, local access of another IP equipment in a household network or of the internet by a mobile terminal may be implemented.

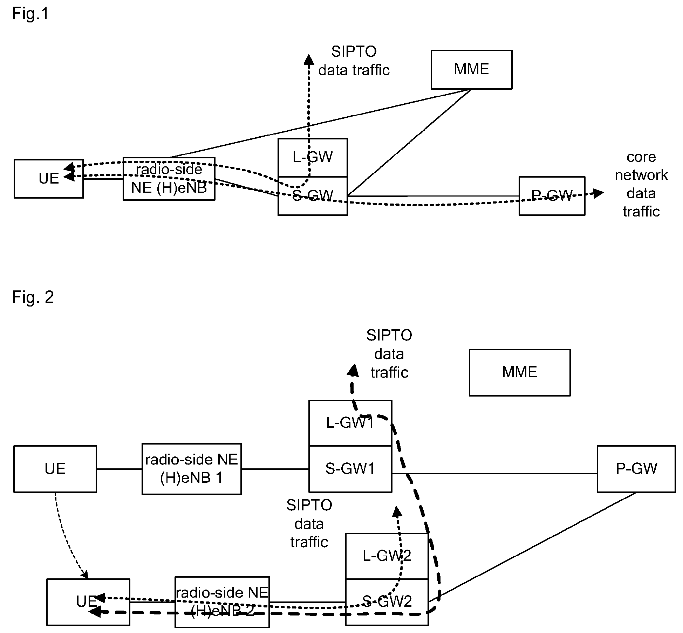

Fig.1 is a diagram of architecture for implementing SIPTO, where IP Traffic Offload is implemented by adding a traffic offloading gateway serving as a local access gateway to an external network (such as the Internet). The traffic offloading gateway may be a Serving Gateway (S-GW), may be a Local Serving Gateway (L-SGW) and a Local Packet Data Network Gateway (L-PGW), or may be a separate Local Gateway (L-GW) or a L-GW and a S-GW. The traffic offloading gateway in Fig.1 is a S-GW and a L-GW.

As shown in Fig.1, a radio-side network element may be an evolved NodeB (eNB) or a Home eNB (HeNB) and /or a household eNB gateway; a Mobility Management Entity (the MME) serves for control-plane work such as mobility management, non-access layer signaling processing and user mobility management, context management, etc.; a S-GW is an access gateway equipment connected to an Evolved Universal Terrestrial Radio Access Network (E-UTRAN) for forwarding data between an eNB and a Packet Data Network Gateway (P-GW), between an (H)eNB and a L-GW, and for caching paging waiting data; the P-GW, as a border gateway of an Evolved Packet System (EPS) and a Packet Data Network (PDN for short), serves for functions such as PDN access and forwarding data between the EPS and the PDN; the local gateway L-GW serves for data forwarding between a local network and an external network; the P-GW is a core network gateway, while the L-GW is arranged co-located with the S-GW in the local network.

The existing system supports S-GW relocation, as shown in Fig.2 (where a line between the MME and a radio-side network element is not shown). A UE may move to an area covered by a new radio-side network element. The MME will select a new S-GW for the UE and execute a S-GW relocation process. During the S-GW relocation, as required by the existing system, the L-GW /P-GW as an anchor gateway, may not be changed. Therefore, IP data traffic run subsequently will be externally routed by being returned via the target S-GW back to L-GW 1 co-located with the source S-GW, and for the target S-GW, L-GW 1 may not be the best network exit (which will be the L-GW 2). This leads to roundabout forwarding of data traffic in the core network, that is, through L-GW 1, which is not the optimal path (as shown in Fig.2, where the thin broken line, instead of the thick broken line, is the optimal path). A non-optimal path may cause disadvantages such as an increased network load, an increased data traffic transmission delay, etc.

### SUMMARY

Embodiments herein provide a method for establishing an optimal path, an MME, a gateway, and a non-transitory computer-readable storage medium, capable of selecting an optimal path for SIPTO data traffic after S-GW relocation while ensuring uninterrupted data traffic, avoiding problems such as an increased network load, an increased data traffic transmission delay, etc. caused by a non-optimal path.

According to one aspect herein, a method for establishing an optimal path includes: in case of a terminal mobility event,
determining, by a mobility management entity MME, whether a path corresponding to a packet data network PDN connection is an optimal path; in response to determining that the path is a non-optimal path, sending, by the MME, a query to a local gateway L-GW to determine whether there are data to be transmitted, such that the L-GW queries about whether there are data to be transmitted; in response to determining that there are no data to be transmitted, initiating, by the MME, a PDN connection reestablishment flow; or
determining, by a local gateway L-GW, whether a path corresponding to a packet data network PDN connection is an optimal path; in response to determining that the path is a non-optimal path, querying, by the L-GW, about whether there are data to be transmitted; in response to determining that there are no data to be transmitted, initiating, by the L-GW via a mobility management entity MME, a PDN connection reestablishment flow.

The determining, by a mobility management entity MME, whether a path corresponding to a packet data network PDN connection is an optimal path may include:
pre-configuring, by the MME, an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining, by the MME, whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

The sending, by the MME, a query to a local gateway L-GW to determine whether there are data to be transmitted may include:
sending, by the MME via a serving gateway S-GW connected to the PDN, the L-GW a query request;
receiving, by the MME, a query response sent by the L-GW via the S-GW connected to the PDN.

The sending, by the MME, a query to a local gateway L-GW to determine whether there are data to be transmitted may further include:
sending, by the MME, the S-GW connected to the PDN a session establishing request; sending, by the S-GW, the L-GW a bearer modifying request; after receiving the bearer modifying request sent by the S-GW, sending, by the L-GW, the S-GW a bearer modifying response; sending, by the S-GW, the MME a session establishing response; or
sending, by the MME, the S-GW connected to the PDN a bearer modifying request; sending, by the S-GW, the L-GW a bearer modifying request; after receiving the bearer modifying request sent by the S-GW, sending, by the L-GW, the S-GW a bearer modifying response; sending, by the S-GW, the MME a bearer modifying response.

The determining, by a local gateway L-GW, whether a path corresponding to a packet data network PDN connection is an optimal path may include:
pre-configuring, by the L-GW, an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining, by the L-GW, whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

The querying, by the L-GW, about whether there are data to be transmitted may include:
querying, by the L-GW, about whether there are, within a designated time period, data to be transmitted corresponding to the PDN connection. The designated time period may be one of:
   a time period right before the query operation by the L-GW takes place;
   a time period right after the query operation by the L-GW takes place;
   a time period within which the query operation by the L-GW takes place;
   a time point when the query operation by the L-GW takes place.

The initiating, by the L-GW via a mobility management entity MME, a PDN connection reestablishment flow may include:
receiving, by the MME, a response returned by the L-GW via a serving gateway S-GW, the response including a reestablishment indication;
initiating, by the MME, a PDN connection releasing process.
according to another aspect herein, a mobility management entity MME includes:
   a first determining module configured for: in case of a terminal mobility event, determining whether a path corresponding to a packet data network PDN connection is an optimal path;
   a query module configured for: in response to determining that the path is a non-optimal path, sending a query to a local gateway L-GW to determine whether there are data to be transmitted, such that the L-GW queries about whether there are data to be transmitted;
   a first initiating module configured for: in response to determining that there are no data to be transmitted, initiating a PDN connection reestablishment flow.

According to another aspect herein, a gateway includes:
a second determining module configured for: in case of a terminal mobility event, determining whether a path corresponding to a packet data network PDN connection is an optimal path;
a third query module configured for: in response to determining that the path is a non-optimal path, querying about whether there are data to be transmitted;
a second initiating module configured for: in response to determining that there are no data to be transmitted, initiating, via a mobility management entity MME, a PDN connection reestablishment flow.

According to another aspect herein, a non-transitory computer-readable storage medium stores therein computer-executable instructions for executing an aforementioned method.

With a technical solution according to an embodiment herein , an MME initiates a PDN connection releasing process, and the user reestablishes a PDN connection, to establish an optimal path while ensuring uninterrupted user data traffic, improving user experience.

### BRIEF DESCRIPTION OF THE DRAWINGS

Fig.1 is a diagram of architecture for implementing SIPTO according to related art.
Fig.2 is a diagram of architecture of a handover including S-GW relocation according to related art.
Fig.3 is a flowchart of a method according to an embodiment herein.
Fig.4 is a flowchart according to Embodiment 1 herein.
Fig.5 is a flowchart according to Embodiment 2 herein.
Fig.6 is a flowchart according to Embodiment 3 herein.
Fig.7 is a flowchart of another method according to an embodiment herein.
Fig.8 is a flowchart according to Embodiment 4 herein.
Fig.9 is a flowchart according to Embodiment 5 herein.
Fig.10 is a flowchart according to Embodiment 6 herein.
Fig.11 is a diagram of a structure of an MME according to an embodiment herein.
Fig.12 is a diagram of a structure of a gateway according to an embodiment herein.

### DETAILED DESCRIPTION

Note that embodiments herein and features thereof can be combined with each other as long as no conflict results from the combination. The present disclosure will be elaborated below with reference to the drawings and the embodiments.

With embodiments herein, after S-GW relocation, an optimal path may be selected for SIPTO data traffic while ensuring uninterrupted data traffic.

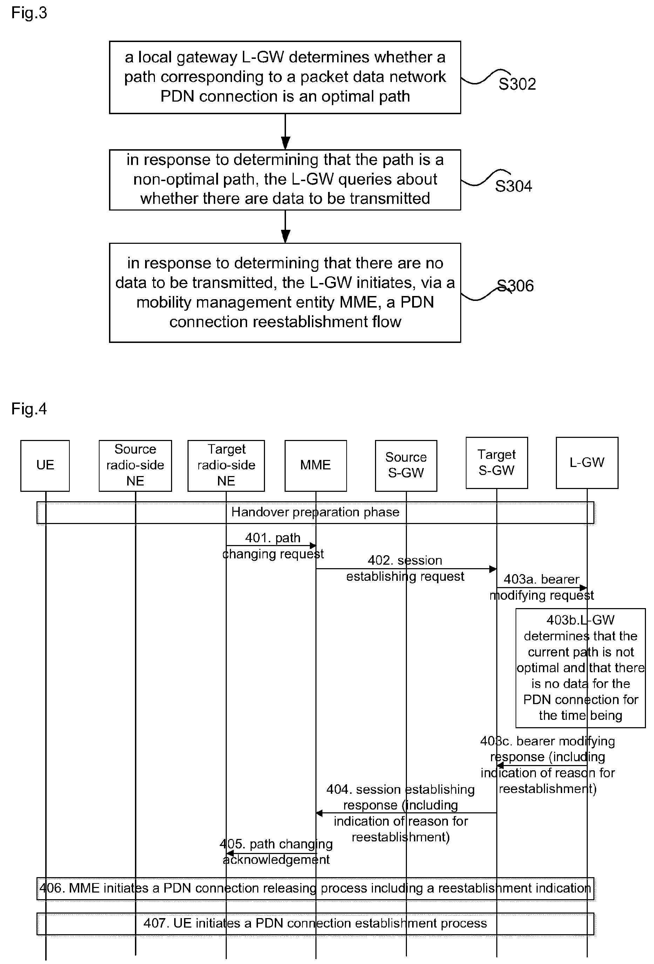

An embodiment herein provides a method for establishing an optimal path. Fig.3 is a flowchart of a method according to an embodiment herein. As shown in Fig.3, the method includes steps as follows.

In S302, a local gateway L-GW determines whether a path corresponding to a packet data network PDN connection is an optimal path.

In S304, in response to determining that the path is a non-optimal path, the L-GW queries about whether there are data to be transmitted.

In S306, in response to determining that there are no data to be transmitted, the L-GW initiates, via a mobility management entity MME, a PDN connection reestablishment flow.

To show a technical solution and implementation herein more clearly, the present disclosure will be elaborated below with reference to embodiments.

### Embodiment 1

Fig.4 is a flowchart according to Embodiment 1 herein, with steps as follows.

In step 1, in a process including S-GW relocation, after receiving a bearer modifying request indicating change in S-GW, the L-GW may determine whether the current path is the optimal path.

In step 2, when the current path is not optimal, the L-GW may determine whether there are user data being transmitted within a time period.

In step 3, a bearer modifying response returned by the L-GW to the S-GW may include a reestablishment indication; a session establishing response returned by the S-GW to the MME as well may include the reestablishment indication; the MME may initiate a PDN disconnection process including indication of reason for reestablishment.

The optimal path may be determined as follows. A list of S-GWs associated with the L-GW may be maintained at the L-GW. An S-GW in the list has the optimal path to the L-GW. When the target S-GW is in the list, the current path may be deemed optimal. When the target S-GW is not in the list, the current path is deemed non-optimal. The list of S-GWs may be pre-configured. By default the list may include an S-GW co-located with the L-GW.

Alternatively, the L-GW may determine, according to an Internet Protocol (IP) address of the L-GW and an IP address of the S-GW, whether the L-GW and the target S-GW are within one network segment. When the L-GW and the target S-GW are within one network segment, it may be determined that the current path is the optimal path. When the L-GW and the target S-GW are not within one network segment, it may be determined that the current path is non-optimal.

It may be determined whether there are user data within a time period (T1) as follows. In the L-GW a timer may be set for each PDN connection of each UE. Such a timer may be started upon reception of (uplink or downlink) UE data. The timer may be zeroed upon the next data reception. When the current path is determined as non-optimal, the L-GW may compare T1 and the current timer value T2. In case of a T2 no less than T1, it may be deemed that there are no data transmission on the PDN connection of the UE within the time period. In case of a T2 less than T1, the L-GW may wait a time period of T1-T2, and then determine whether there are data on the PDN connection in the time period.

A reason may be added to the reestablishment indication included in the L-GW, indicating to the MME that "MME has to initiate a PDN connection releasing process including a PDN connection reestablishment indication ".

Fig.4 is a flowchart of a handover including S-GW relocation based on the architecture shown in Fig.1 according to the disclosure. Fig.4 shows only messages relevant to an embodiment herein during the handover. Steps thereof may be as follows.

In 401, a path changing request may be sent from the target radio-side network element to the MME.

In 402, a session establishing request may be sent by the MME to the target S-GW.

In 403a, a bearer modifying request may be sent by the target S-GW to the L-GW.

In 403b, after receiving the bearer modifying request indicating change in S-GW, the L-GW may determine whether the current path is optimal, as mentioned above. For example, the L-GW may determine whether the target S-GW is in the list of S-GWs maintained locally. When the target S-GW is in the list, it may be deemed that the current path is the optimal path. When the target S-GW is not in the list, it may be determined that the current path is non-optimal. When the current path is non-optimal, the L-GW may determine whether there are user data being transmitted within a time period T1, as mentioned above. For example, the L-GW may compare the current timer value T2 to T1. In case of a T2 no less than T1, it may be deemed that no data is transmitted within T1. In case of a T2 less than T1, the L-GW may wait a time period of T1-T2. When no data is transmitted within the waiting time, it may be deemed as well that no data is transmitted within T1.

In 403c, when no user data is being transmitted within a time period, the L-GW may include, in a bearer modifying response, indication of new reason for reestablishment, indicating to the MME that "MME has to initiate a PDN connection releasing process including a PDN connection reestablishment indication ".

In 404, the target S-GW may send the MME a session establishing response, including the reason in step 403c, indicating to the MME that "MME has to initiate a PDN connection releasing process including a PDN connection reestablishment indication ".

In 405, the MME may send the target radio-side network element a path changing acknowledgement.

In 406, after receiving the indication of new reason for reestablishment, the MME may initiate a PDN connection releasing process including a reestablishment indication.

In 407, the user may initiate PDN connection establishment again.

When in step 403b, the L-GW determines that the current path has already been optimal, the L-GW may continue to execute an existing standard flow.

The embodiment may also apply to a location updating process including S-GW relocation. In this case, the message of step 401 may be a location updating request.

### Embodiment 2

Steps according to Embodiment 2 herein may be as follows.

In step 1, during an MME-changing handover including S-GW relocation, after receiving a bearer modifying request indicating change in S-GW, the L-GW may determine whether the current path is the optimal path.

In step 2, when the current path is not optimal, the L-GW may determine whether there are user data being transmitted within a time period.

In step 3, a bearer modifying response returned by the L-GW to the S-GW may include a reestablishment indication; a session establishing response returned by the S-GW to the MME as well may include the reestablishment indication; the MME may initiate a PDN disconnection process including indication of reason for reestablishment.

The embodiment differs from Embodiment 1 in step 3, the session establishing response returned by the S-GW to the MME may include the reestablishment indication sent by the L-GW.

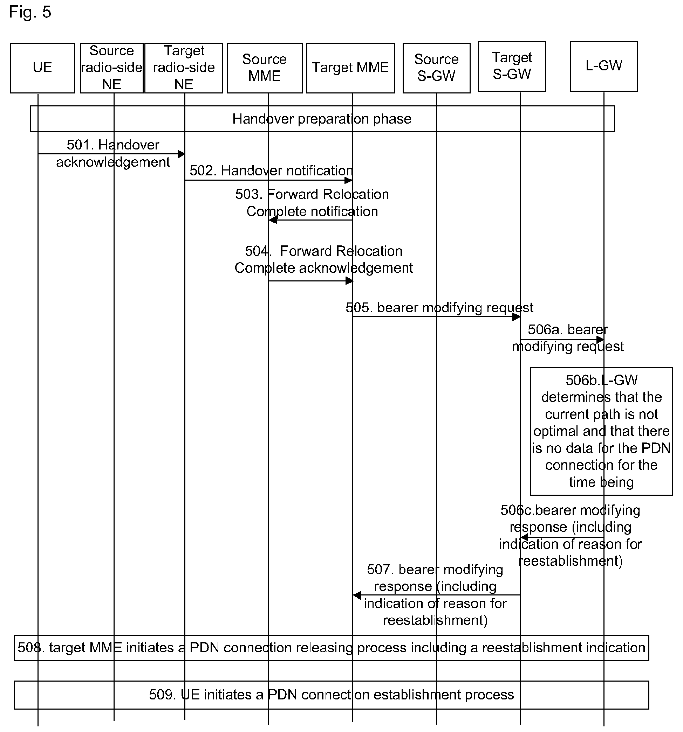

Fig.5 is an MME-changing handover process including S-GW relocation based on the architecture shown in Fig.1. Fig.5 shows only messages relevant to an embodiment herein during the handover.

Steps thereof may be as follows.

In 501, the UE may send the target radio-side network element a handover acknowledgement.

In 502, the target radio-side network element may send the target MME a handover notification.

In 503, the target MME may send the source MME a Forward Relocation Complete notification.

In 504, the source MME may send the target MME a Forward Relocation Complete acknowledgement.

In 505, the target MME may send the target S-GW a bearer modifying request.

In 506a, a bearer modifying request may be sent by the target S-GW to the L-GW.

In 506b, after receiving the bearer modifying request indicating change in S-GW in step 506a, the L-GW may determine whether the current path is optimal, as shown in Embodiment 1. For example, the L-GW may determine whether the target S-GW is in the list of S-GWs maintained locally. When the target S-GW is in the list, it may be deemed that the current path is the optimal path. When the target S-GW is not in the list, it may be determined that the current path is non-optimal. When the current path is non-optimal, the L-GW may determine whether there are user data being transmitted within a time period T1, as shown in Embodiment 1. For example, the L-GW may determine whether there are user data being transmitted within a time period T1, compare the current timer value T2 to T1. In case of a T2 no less than T1, it may be deemed that no data is transmitted within T1. In case of a T2 less than T1, the L-GW may wait a time period of T1-T2. When no data is transmitted within the waiting time, it may be deemed as well that no data is transmitted within T1.

In 506c, when it is determined that no data is transmitted within a time period, the L-GW may include, in a bearer modifying response returned to the target S-GW, an indication of reason for reestablishment, indicating to the MME that "MME has to initiate a PDN connection releasing process including a PDN connection reestablishment indication".

In 507, the target S-GW may send the target MME a bearer modifying response including the reason in 406c, indicating to the MME that "MME has to initiate a PDN connection releasing process including a PDN connection reestablishment indication".

In 508, after receiving the message including the indication of reason for reestablishment in step 507, the target MME may initiate a PDN connection releasing process including a reestablishment indication.

In 509, the UE may initiate a PDN connection establishment process.
when in step 506b the L-GW determines that the current path has already been optimal, the L-GW may continue to execute an MME-changing flow including S-GW relocation according to an existing standard.

### Embodiment 3

Steps according to Embodiment 3 herein may be as follows.

In step 1, during an MME-changing handover including S-GW relocation, in a handover preparation phase, upon receiving a session establishing request sent by the target MME, the target S-GW may send a bearer modifying request to the L-GW.

In step 2, after receiving the bearer modifying request indicating change in S-GW, the L-GW may determine whether the current path is the optimal path.

In step 3, when the current path is not optimal, the L-GW may determine whether there are user data being transmitted within a time period.

In step 4, a bearer modifying response returned by the L-GW to the S-GW may include a reestablishment indication; a session establishing response returned by the S-GW to the MME as well may include the reestablishment indication; the MME may initiate a PDN connection releasing process including indication of reason for reestablishment.

The embodiment differs from Embodiment 2 as follows.
1) the flow of the embodiment occurs in the handover preparation phase, while that of Embodiment 2 occurs in the handover executing phase.
2) in step 3, the session establishing response returned by the S-GW to the MME may include the reestablishment indication sent by the L-GW.

The embodiment differs from Embodiment 1 in that the trigger for the target MME to send the target S-GW the session establishing request is that the source MME sends the target MME a Forward Relocation request.

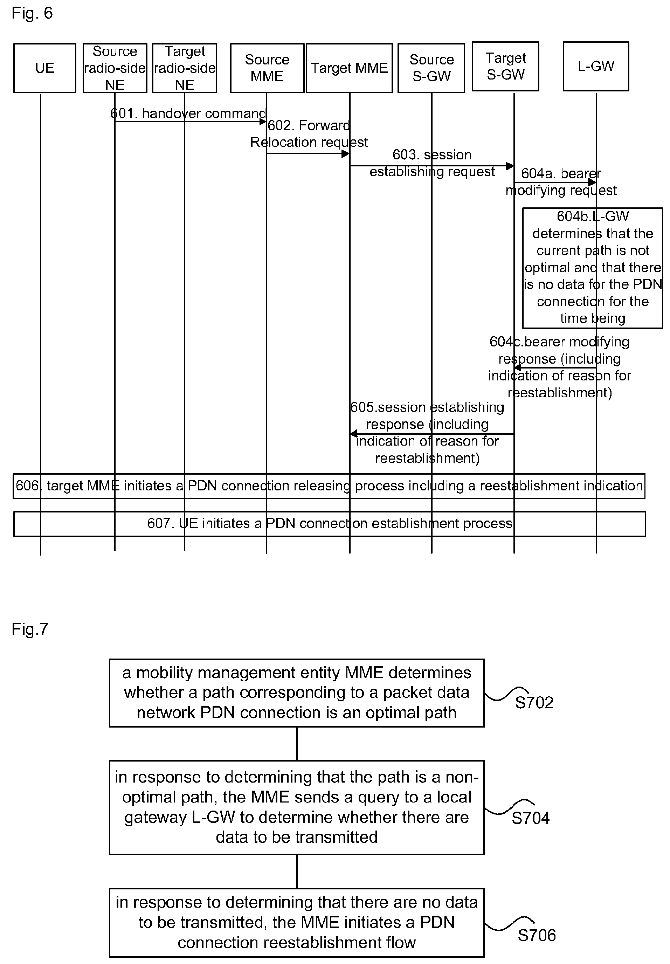

Fig.6 is an MME-changing handover process including S-GW relocation based on the architecture shown in Fig.1. Fig.6 shows only messages relevant to an embodiment herein during the handover.

Steps thereof may be as follows.

In 601, the source radio-side network element may send the source MME a handover command.

In 602, the source MME may send the target MME a Forward Relocation request.

In 603, the target MME may send a session establishing request. to the target S-GW.

Steps 604a∼c are the same as Fig.4, steps 403a∼c.

Step 605 may be the same as Fig.4, step 404.

In step 606, after receiving the message including the indication of reason for reestablishment in step 605, the target MME may initiate a PDN connection releasing process including a reestablishment indication.

Step 607 may be the same as Fig.4, step 407.
when in step 604b the L-GW determines that the current path has already been optimal, messages in steps 604c and 605 may include no reason for reestablishment, and the steps 606 and 607 will not occur, the method may then continue with an MME-changing flow including S-GW relocation according to an existing standard.

Note that the embodiment extends an MME-changing process including S-GW relocation according to an existing standard, upon receiving the session establishing request sent by the target MME, the target S-GW may at once send the L-GW a bearer modifying request to notify the L-GW of the change in S-GW.

An embodiment herein further provides a method for establishing an optimal path. Fig.7 is a flowchart of a method according to an embodiment herein. As shown in Fig.7, the method includes steps as follows.

In S702, a mobility management entity MME determines whether a path corresponding to a packet data network PDN connection is an optimal path.

In S704, in response to determining that the path is a non-optimal path, the MME sends a query to a local gateway L-GW to determine whether there are data to be transmitted, such that the L-GW queries about whether there are data to be transmitted.

In S706, in response to determining that there are no data to be transmitted, the MME initiates a PDN connection reestablishment flow.

To show a technical solution and implementation herein more clearly, the present disclosure will be elaborated below with reference to three embodiments as follows.

### Embodiment 4

Steps according to the embodiment herein may be as follows.

In step 1, during S-GW handover or relocation, the MME determines whether the current path is optimal.

In step 2, when the current path is non-optimal, the MME sends a query to a local gateway L-GW to determine whether there are user data to be transmitted within a time period.

In step 3, the L-GW determines whether there are user data to be transmitted within a time period; when there is no data, a bearer modifying response returned by the L-GW to the S-GW includes a query result; a session establishing response returned by the S-GW to the MME includes as well the query result; the MME initiates a PDN connection releasing process.

It is determined whether the current path is optimal, in the same way as in Embodiment 1. For example, the MME may maintain a list of S-GWs for each L-GW. An S-GW in the list has the optimal path to the L-GW. When the target S-GW is in the list corresponding to the L-GW, the current path may be deemed optimal. When the target S-GW is not in the list, the current path is deemed non-optimal. the list may be pre-configured. By default the list may include an S-GW co-located with the L-GW.

Alternatively, the MME may detect IP addresses of the L-GW and of the S-GW to determine whether the L-GW and the target S-GW are within one network segment. When the target S-GW is in the same network segment as the L-GW, the current path may be deemed optimal, When the L-GW and the target S-GW are not within one network segment, it may be determined that the current path is non-optimal.

The L-GW may determine whether there are user data to be transmitted, in the same way as in Embodiment 1.

The embodiment requires extending messages in an existing standard, by adding a query request or by adding a GTP-C information element in the existing session establishing request sent by the MME to the target S-GW. A new GTP-C information element (included in both the session establishing request and the bearer modifying request) may serve for indicating the L-GW to query about whether there are user data to be transmitted for the time being.

The GTP-C is short for GTP protocol control plane. GTP is short for General Packet Radio Service Tunnel Protocol.

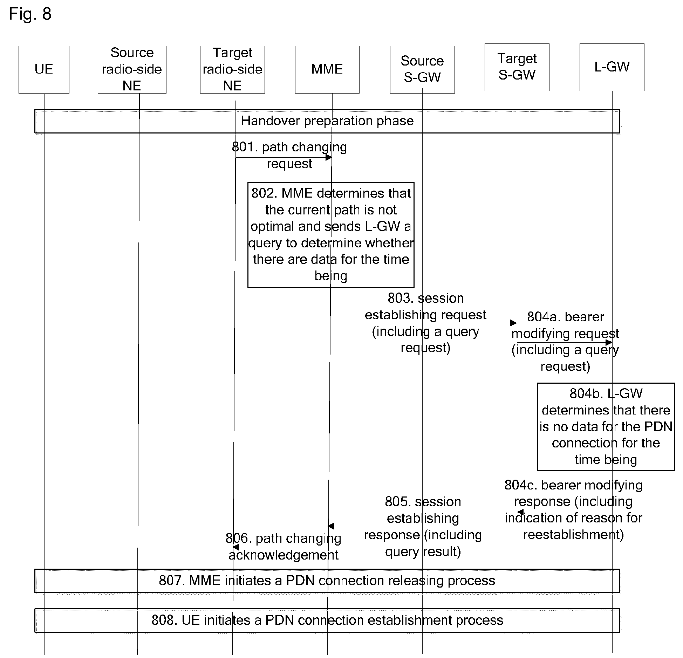

Fig.8 is a handover process including S-GW relocation based on the architecture shown in Fig.1. Fig.8 shows only messages relevant to an embodiment herein during the handover. Steps thereof may be as follows.

In 801, a path changing request may be sent from the target radio-side network element to the MME.

In 802, the MME may select a target S-GW, and determine whether the path corresponding to the PDN connection is optimal. For example, the MME may check a list of S-GWs maintained locally for the current L-GW. When the target S-GW is in the list, the current path is the optimal path. When the target S-GW is not in the list, the current path is non-optimal. Note that when the user moves into an area served by the target S-GW, the path segment from the user to the target S-GW through a radio-side network element is already optimal. The reason the path is non-optimal is that the current L-GW may not be the optimal L-GW.

In 803, when the MME determines in step 802 that the current path is non-optimal, the MME may send a query to the L-GW to determine whether there are data to be transmitted for the time being. The query request may be implemented by including a query indication, and optionally a query time, etc., in a session establishing request sent by the MME to the target S-GW.

In 804a, the target S-GW may send the L-GW a bearer modifying request, to deliver the query indication, and optionally the query time, of step 803.

In 804b, after receiving the bearer modifying request including the query indication of step 804a, the L-GW may determine whether there are data for the PDN connection for a current time period (assumed T1), in the same way as in Embodiment 1.

Step 804c may be the same as Fig.4, step 403c.

Steps 805-808 may be basically the same as Fig.4, steps 404∼407, with the difference that "reason for reestablishment" in Fig.4 is replaced by "query result".

The MME may learn, according to the query result, whether there are data being transmitted on the L-GW, to decide whether to initiate PDN connection reestablishment. When there are data being transmitted, no reestablishment is initiated. When there is no data being transmitted, reestablishment is initiated.

The embodiment too may apply to a location updating process including S-GW relocation. In this case, the message of step 801 may be a location updating request sent by the user to the MME via a radio-side network element.

### Embodiment 5

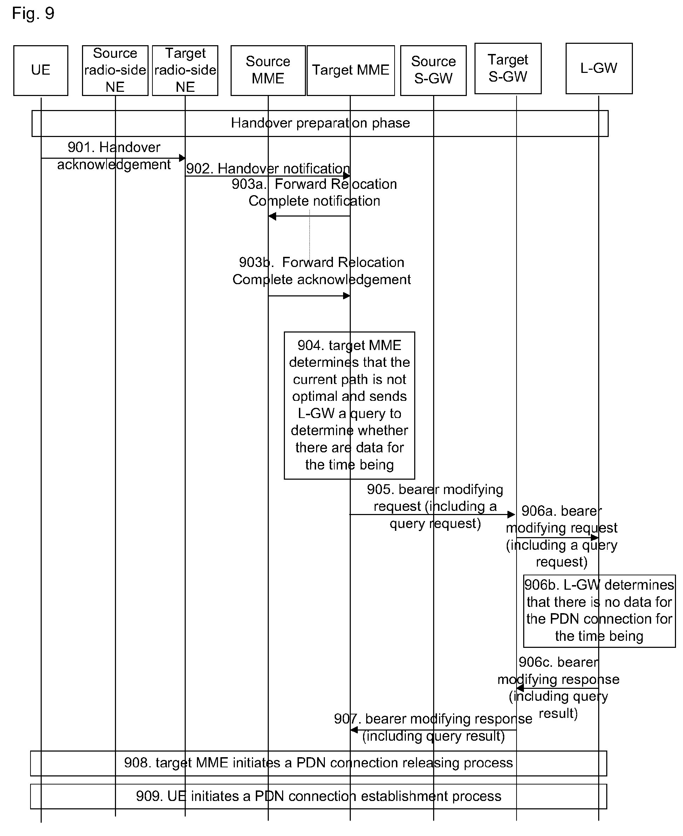

Fig.9 is an MME-changing handover process including S-GW relocation according to the disclosure. Fig.9 shows only messages relevant to an embodiment herein during the handover.

Steps thereof may be as follows.

Steps 901∼903b may be identical to Fig.5, steps 501∼504.

In step 904, the target MME may determine whether the current path is optimal. For example, the MME may check a list of S-GWs maintained locally for the current L-GW. When the target S-GW is in the list, the current path is the optimal path. When the target S-GW is not in the list, the current path is non-optimal.

In step 905, when the MME determines in step 904 that the current path is non-optimal, the MME may send a query to the L-GW to determine whether there are data to be transmitted for the time being. The query request may be a new GTP-C information element, included in a bearer modifying request sent by the MME to the target S-GW. The new GTP-C information element may include: a query indication, a query time, etc.

Steps 906a∼906c may be identical to Fig.8, steps 804a∼804c.

Steps 907∼909 may be basically the same as Fig.5, steps 507∼509. The difference is that "reason for reestablishment" in Fig.5 is replaced by "query result".

The MME may learn, according to the query result, whether there are data being transmitted on the L-GW, to decide whether to initiate PDN connection reestablishment. When there are data being transmitted, no reestablishment is initiated. When there is no data being transmitted, reestablishment is initiated.

When in step 904 the target MME determines that the current path is the optimal path, a flow according to an existing stand may be executed subsequently. When in step 906b the L-GW determines that there are data for the time being, the L-GW may include no query result in the returned response, and steps 908 and 909 do not occur.

The embodiment differs from Embodiment 4 in that steps 905 and 907 are respectively the bearer modifying request and the bearer modifying response.

### Embodiment 6

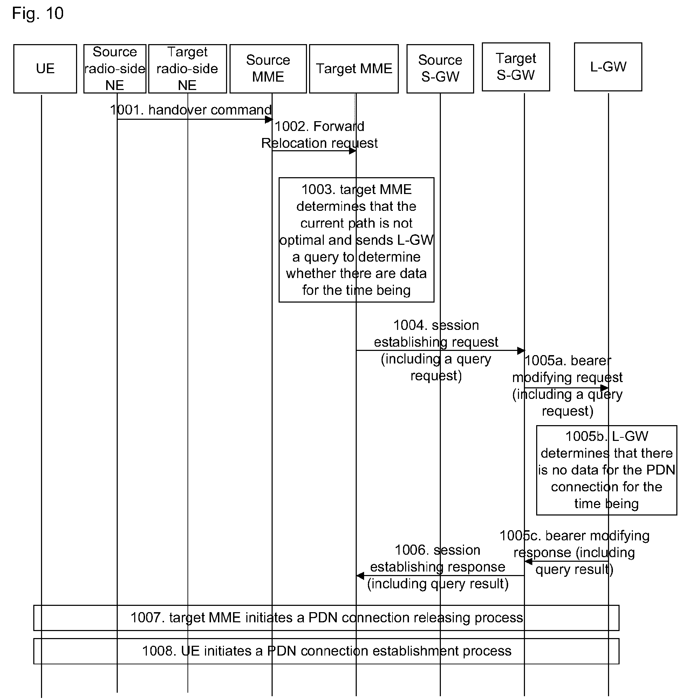

Fig.10 is an MME-changing handover process including S-GW relocation according to the disclosure. Fig.10 shows only messages relevant to an embodiment herein during the handover.

Steps thereof may be as follows.

Steps 1001∼1002 may be identical to Fig.6, steps 601∼602.

Steps 1003∼1006 may be identical to Fig.8, steps 803∼806. Note that the embodiment requires extending an MME-changing process including S-GW relocation according to an existing standard. Upon receiving a session establishing request sent by the target MME, the target S-GW may at once send the L-GW a bearer modifying request to notify the L-GW of the change in S-GW.

In 1007, after receiving the message including a query result of step 1006, the target MME may initiate a PDN connection releasing process.

Step 1008 may be identical to Fig.8, step 808.

When in step 1003 the MME determines that the current path is the optimal path, the method may continue by executing a flow according to an existing standard. When in step 1005b the L-GW determines that there are data for the time being, the L-GW may include no query result in the returned response, and steps 1007 and 1008 do not occur.

The embodiment differs from Embodiment 5 in a way similar to Embodiment 3 differs from Embodiment 2.

The embodiment differs from Embodiment 4 in a way similar to Embodiment 3 differs from Embodiment 1.

Note that steps shown in flowcharts of the drawings may be executed in a computer system as a set of computer-executable instructions, for example. In addition, although a logic sequence is shown in a flowchart, in some cases, the steps shown or illustrated may be executed in an order different from the order herein.

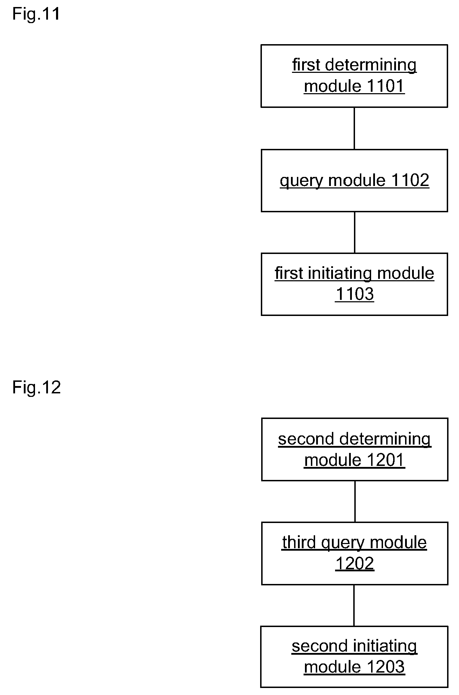

An embodiment herein further provides a mobility management entity MME, which may be used for implementing the method. Fig.11 is a diagram of a structure according to the embodiment. As shown in Fig.11, the MME includes:
a first determining module 1101 configured for: determining whether a path corresponding to a packet data network PDN connection is an optimal path;
a query module 1102 configured for: in response to determining that the path is a non-optimal path, sending a query to a local gateway L-GW to determine whether there are data to be transmitted;
a first initiating module 1103 configured for: in response to determining that there are no data to be transmitted, initiating a PDN connection reestablishment flow.

An embodiment herein further provides a gateway, which may be used for implementing the method. Fig.12 is a diagram of a structure according to the embodiment. As shown in Fig.12, the gateway includes:
a second determining module 1201 configured for: in case of a terminal mobility event, determining whether a path corresponding to a packet data network PDN connection is an optimal path;
a third query module 1202 configured for: in response to determining that the path is a non-optimal path, querying about whether there are data to be transmitted;
a second initiating module 1203 configured for: in response to determining that there are no data to be transmitted, initiating, via a mobility management entity MME, a PDN connection reestablishment flow.

Note that a device embodiment corresponds to a method embodiment; thus implementation thereof has been elaborated in the method embodiment and thus is not repeated.

An embodiment herein further provides a non-transitory computer-readable storage medium, storing computer-executable instructions for executing a method mentioned above.

To sum up, embodiments herein may reduce risk of a terminal identity in an identification network being leaked to an access network, thereby increasing security of the identity network.

An aforementioned unit may be implemented by a Central Processing Unit (CPU), a Digital Signal Processor (DSP) or a Field-Programmable Gate Array (FPGA) in an electronic equipment implementing.

Those skilled in the art will know that embodiments herein may provide a method, system, or computer program product. Therefore, an embodiment herein may take on a form of hardware, software, or a combination thereof. In addition, an embodiment herein may take on a form of a computer program product implemented on one or more computer available storage media (including but not limited to, magnetic disk memory, optic memory, and the like) containing computer available program codes.

The disclosure is illustrated with reference to flowcharts and/or block diagrams of the method, device (system) and computer-program product according to embodiments described herein. Note that each flow in the flowcharts and/or each block in the block diagrams as well as combination of flows in the flowcharts and/or blocks in the block diagrams may be implemented by instructions of a computer program. Such instructions may be offered in a processor of a general-purpose computer, a dedicated computer, an embedded processor or other programmable data processing devices to generate a machine, such that a device with a function specified in one or more flows of the flowcharts and/or one or more blocks in the block diagrams is produced by instructions executed by a processor of a computer or other programmable data processing devices.

These computer-program instructions may also be stored in a non-transitory computer-readable memory capable of guiding a computer or another programmable data processing device to work in a given way, such that the instructions stored in the computer-readable memory generate a manufactured good including an instruction device for implementing a function specified in one or more flows of the flowcharts and/or one or more blocks in the block diagrams.

These computer-program instructions may also be loaded in a computer or other programmable data processing devices, which thus executes a series of operations thereon to generate computer-implemented processing, such that the instructions executed on the computer or other programmable data processing devices provide the steps for implementing the function specified in one or more flows of the flowcharts or one or more blocks in the block diagrams.

What described are merely embodiments herein and are not intended to limit the disclosure. Those skilled in the art will know that there may be various modifications and variations. Any modification, equivalent replacement, improvement, and the like made within the spirit and principle herein are included in the scope of the disclosure.

## Claims

1. A method for establishing an optimal path, comprising: in case of a terminal mobility event,
determining, by a mobility management entity MME, whether a path corresponding to a packet data network PDN connection is an optimal path; in response to determining that the path is a non-optimal path, sending, by the MME, a query to a local gateway L-GW to determine whether there are data to be transmitted, such that the L-GW queries about whether there are data to be transmitted; in response to determining that there are no data to be transmitted, initiating, by the MME, a PDN connection reestablishment flow;
or
determining, by a local gateway L-GW, whether a path corresponding to a packet data network PDN connection is an optimal path; in response to determining that the path is a non-optimal path, querying, by the L-GW, about whether there are data to be transmitted; in response to determining that there are no data to be transmitted, initiating, by the L-GW via a mobility management entity MME, a PDN connection reestablishment flow.

2. The method according to claim 1, wherein the determining, by a mobility management entity MME, whether a path corresponding to a packet data network PDN connection is an optimal path comprises:
pre-configuring, by the MME, an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining, by the MME, whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

3. The method according to claim 1, wherein the sending, by the MME, a query to a local gateway L-GW to determine whether there are data to be transmitted comprises:
sending, by the MME via a serving gateway S-GW connected to the PDN, the L-GW a query request;
receiving, by the MME, a query response sent by the L-GW via the S-GW connected to the PDN.

4. The method according to claim 3, wherein the sending, by the MME, a query to a local gateway L-GW to determine whether there are data to be transmitted further comprises:
sending, by the MME, the S-GW connected to the PDN a session establishing request; sending, by the S-GW, the L-GW a bearer modifying request; after receiving the bearer modifying request sent by the S-GW, sending, by the L-GW, the S-GW a bearer modifying response; sending, by the S-GW, the MME a session establishing response; or
sending, by the MME, the S-GW connected to the PDN a bearer modifying request; sending, by the S-GW, the L-GW a bearer modifying request; after receiving the bearer modifying request sent by the S-GW, sending, by the L-GW, the S-GW a bearer modifying response; sending, by the S-GW, the MME a bearer modifying response.

5. The method according to claim 4, wherein the session establishing request or the bearer modifying request comprises a query indication;
the session establishing response or the bearer modifying response comprises a query result.

6. The method according to claim 1, wherein the determining, by a local gateway L-GW, whether a path corresponding to a packet data network PDN connection is an optimal path comprises:
pre-configuring, by the L-GW, an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining, by the L-GW, whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

7. The method according to claim 1, wherein the querying, by the L-GW, about whether there are data to be transmitted comprises:
querying, by the L-GW, about whether there are, within a designated time period, data to be transmitted corresponding to the PDN connection, the designated time period being one of:
a time period right before the query operation by the L-GW takes place;
a time period right after the query operation by the L-GW takes place;
a time period within which the query operation by the L-GW takes place;
a time point when the query operation by the L-GW takes place.

8. The method according to claim 1, wherein the initiating, by the L-GW via a mobility management entity MME, a PDN connection reestablishment flow comprises:
receiving, by the MME, a response returned by the L-GW via a serving gateway S-GW, the response comprising a reestablishment indication;
initiating, by the MME, a PDN connection releasing process.

9. A mobility management entity MME, comprising:
a first determining module configured for: in case of a terminal mobility event, determining whether a path corresponding to a packet data network PDN connection is an optimal path;
a query module configured for: in response to determining that the path is a non-optimal path, sending a query to a local gateway L-GW to determine whether there are data to be transmitted, such that the L-GW queries about whether there are data to be transmitted;
a first initiating module configured for: in response to determining that there are no data to be transmitted, initiating a PDN connection reestablishment flow.

10. The MME according to claim 9, wherein the first determining module is configured for: pre-configuring an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

11. A gateway, comprising:
a second determining module configured for: in case of a terminal mobility event, determining whether a path corresponding to a packet data network PDN connection is an optimal path;
a third query module configured for: in response to determining that the path is a non-optimal path, querying about whether there are data to be transmitted;
a second initiating module configured for: in response to determining that there are no data to be transmitted, initiating, via a mobility management entity MME, a PDN connection reestablishment flow.

12. The gateway according to claim 11, wherein the second determining module is configured for: pre-configuring an association of the L-GW with a serving gateway S-GW; in response to determining, according to the association, that an S-GW connected to the PDN is associated with the L-GW, determining that the path corresponding to the PDN connection is the optimal path; otherwise in response to determining, according to the association, that an S-GW connected to the PDN is not associated with the L-GW, determining that the path corresponding to the PDN connection is a non-optimal path; or
determining whether an Internet Protocol IP address of the L-GW and an IP address of an S-GW connected to the PDN are within one network segment; in response to determining that the L-GW and the S-GW connected to the PDN are within one network segment, determining that the path corresponding to the PDN connection is the optimal path; otherwise in response to determining that the L-GW and the S-GW connected to the PDN are not within one network segment, determining that the path corresponding to the PDN connection is a non-optimal path.

13. A non-transitory computer-readable storage medium, storing computer-executable instructions for executing a method according to any one of claims 1 through 8.
